# EUROPEAN PATENT SPECIFICATION

(11) **EP 2 511 117 B1**
(45) Date of publication and mention of the grant of the patent: **29.03.2017**
(21) Application number: 11162247.8
(22) Date of filing: 13.04.2011
(51) Int. Cl.: B60J 7/02, B60J 10/00

(54) **Sunroof arrangement including assembly method**
Schiebedachanordnung einschliesslich Montageverfahren
Agencement d'un toit ouvrant y compris méthode d'assemblage

(43) Date of publication of application: 17.10.2012
(73) Proprietor: Volvo Car Corporation, 40 531 Göteborg (SE)
(72) Inventor: Dryselius, Joakim, 42167, Västra Frölunda (SE)
(74) Representative: Volvo Car Corporation

(56) References cited:
- EP-A1- 2 020 323
- EP-A2- 2 042 361
- DE-A1- 19 732 700
- DE-A1- 19 810 839
- DE-B3- 10 326 433
- US-A1- 2010 038 933

## Description

### FIELD OF THE INVENTION

The present invention relates to a sunroof structure for a vehicle comprising a front, a rear, a left and a right side. The structure further comprises a flange for holding a bulb seal, the flange being arranged at least partly on the front, the left and the right side. The present invention also includes a method for assembling a sunroof structure.

### BACKGROUND

An automotive sunroof is a fixed or operable (venting or sliding) opening in an automobile roof which allows light and/or fresh air to enter the passenger compartment. Sunroofs may be manually operated or motor driven, and are available in many shapes, sizes and styles.

Sunroofs, by historical definition are opaque and slide open to allow sunshine and fresh air into the passenger compartment. Today, most factory sliding sunroof options feature a glass panel and are sometimes marketed as moonroofs.

Variations of both the sunroof and moonroof have become the norm in both factory installed and aftermarket offerings, creating a wide range of features and choices.

Sunroof systems may be manual or electric motor driven. Manual sunroofs may be lever actuated, as in venting type pop-ups, manual lever or crank operated for sliding systems. Electric roof systems are usually cable driven by a motor and feature some form of sliding opening. Most moonroof systems today are electric and have either a combination pop-up/inbuilt or a pop-up/spoiler configuration.

Roof systems may be original equipment, factory installed options (provided by the car company), or installed aftermarket by a roof installation professional for the car dealer or retail customer. Once the vehicle leaves the assembly line, the factory option can no longer be integrated into the roof, making aftermarket the only option.

Roof systems are available in many shapes, sizes and styles, and are known by many names. The generally accepted sunroof/moonroof industry terms are as follows:
Pop-up sunroofs are simply a manually-operated tilting panel. These panels are usually removable, and like T-roofs, must be stored when removed. The tilting action provides a vent in the roof, or a full opening when the panel is removed. Pop-ups can be installed in most vehicles, and are relatively inexpensive.

Spoiler sunroofs (tilt-&-slides) combine the features of a pop-up with those of a sliding roof system. They tilt to vent and slide open above the roof, requiring little headroom or roof length. Spoilers typically do not provide as large an opening as other roof systems, but offer the convenience of a self-storing panel. Most spoiler roofs are electric, with optional features like integrated sun shades and express open/close. Spoilers are ideal for short-roof vehicles where other types of sliders can't be installed.

Inbuilt sunroof systems have a panel which slides between the metal roof and interior headliner, requiring some loss of headroom but providing a full opening in the roof. All inbuilts slide inside the roof, while some also include a rear venting feature, and/or express open/close functions. Inbuilts don't fit every vehicle, as the panel must slide and store completely within the vehicle roof. Historically, inbuilts were a metal sunroof panel painted to match the vehicle roof, but now most are glass-panel systems with sliding sunshades (typically referred to as moonroofs).

Folding sunroofs (often called rag-tops or cabrio coach) are a European tradition. They offer the convenience of a sunroof, with an opening more like a convertible. The panel is made of fabric (often vinyl), which folds back as it slides open. After a long absence in European and North American Markets, folding sunroofs have experienced resurgence with several new factory-installed options. Aftermarket versions were once only manual, but now are also available in powered versions.

Top-mount sliding sunroofs (rail mount top slider) have been a popular factory option in Europe for many years. A large glass panel slides open in tracks on top of the roof, with no loss of headroom. Most feature an integral wind deflector to eliminate wind noise.

Panoramic roof systems are a new type of large or multi-panel moonroof which offer openings above both the front and rear seats and may be operable or fixed glass panels. Large operable openings are often accomplished with top-slider (tracks in the top of the roof) or spoiler type mechanisms.

Removable roof panels (T-tops or targa roofs) open a vehicle roof to the side windows, providing a wider opening than other roof systems. T-roofs have two removable panels and leave a T-shaped structural brace in the roof centre. Targa roofs include only one (opaque or transparent) panel and leave no cross brace. Aftermarket kits are no longer made, but several companies sell replacement and remanufactured panels, parts and accessories

Motorized power roof systems may be operated by a simple push-and-hold switch, or may include an electronic control module (ECM) to provide single-touch express opening, express closing and/or auto-closing on ignition off.

Solar sunroofs actually are made of glass, which unlike the proper moonroof terminology standards have an inlaid photovoltaic solar insert, or solar panel, making the glass totally opaque (thus allowing the proper term 'sunroof'). While they operate identically to conventional factory-fitted glass moonroofs (tilting and retracting), the solar panel provides electricity to power the interior ventilation fans, for cooling the car interior on hot days when the car is standing outdoors in the sunlight.

The present invention concerns factory installed sunroofs of the kind where a sealing is present. Generally, prior art sunroof assemblies include a weather strip as a sealing member for sealing a clearance between the panel or panels and the roof opening portion in order to prevent the invasion of water or reduce noise in a vehicle compartment.

For some presently used solutions the sealing consists of several parts. In one example there are 5 different parts; a front acoustic bulb seal, front side covers as well as rear side covers. The front acoustic bulb seal is attached to the main delivery sunroof unit, while the front and rear side covers are separate delivery units. Due to the fully automatic process with the need of access to adjustment screws, the front and rear side covers needs to be assembled manually after the main assembly adjustment process. The parts needs to be picked up from different boxes along the assembly line, brought into the chassis/vehicle and each one assembled onto the sunroof in the interior roof area of the car body.

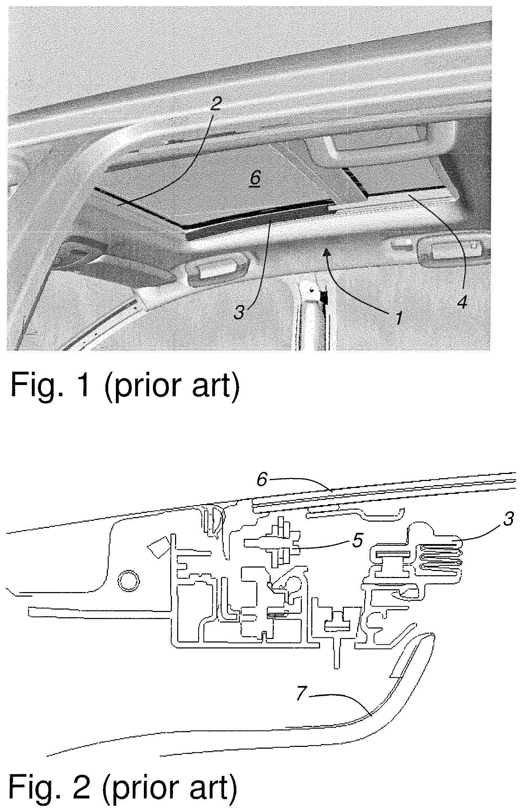

Figure 1 is an overview of a panorama roof 1 according to prior art. As seals can be seen the front acoustic bulb seal 2, the right front side cover 3 and the right rear side cover 4. With the left side front and rear side covers this thus results in 5 different parts. A cross section of a part of the sunroof structure at the front side cover 3 can be seen in figure 2. An adjustment screw 5 can be seen on the inside of the front side cover 3, i.e. the front side cover 3 can only be mounted after the glass panel 6 has been adjusted into its final position by the adjustment screw 5. A headlining 7 is finally covering the carrying structure of the sunroof 1.

EP 2 042 361 discloses a vehicle roof with a roof opening wherein the roof has a flange surrounding a roof opening, at which a roof module is insertable. Guide rails are arranged at a roof frame, and roof parts are supported at the guide rails. The frame is provided with a sealing frame surrounding all sides of the roof opening attachable on the flange. The rails and the frame parts of the roof frame are fastened in the sealing frame. The flange is sealed by using a sealing. Fastening elements are provided such that the rails and the frame parts are connectable at a lower side of the flange by the fastening elements.

### SUMMARY OF THE INVENTION

The object of the present invention is to provide sunroof structure that helps facilitating the assembly and a method for assembling a sunroof structure which reduces the amount of time for assembling the structure.

These objects are achieved by the sunroof structure and method as set forth in the appended claims.

According to the present invention there is provided a sunroof structure for a vehicle comprising a front, a rear, a left and a right side, the structure further comprising a flange for holding a bulb seal, the flange being arranged at least partly on the front, the left and the right side. Further, the structure comprises a second flange arranged at least partly on two of the sides of the structure for holding the bulb seal when the sunroof is being mounted. Thus, with the present invention one part replaces, according to one prior art arrangement, five parts. The one part being a combined acoustic/inner blind bulb seal, temporarily fixed to the sunroof structure in a "parking" position on said second flange during transport. One of the purposes of the present invention is to have these parking position flanges adjacent to where the adjustment screws/devices are located, i.e. when the bulb is parked the adjustment screws/devices are accessible.

Further advantages are reduction in number of parts which leads to cost savings, man hour savings at production line as well as improved ergonomics for blue collars.

According to one aspect of the present invention the flanges are extruded aluminium tracks. Apart from the fact that aluminium is light, extruded aluminium profiles are in the cases with sunroofs that are possible to open already present in the structure for holding and controlling the movement of the panels. Thus, the second flange could in its simplest form be a lip protruding from the already "existing" aluminium profile.

The first flange is arranged on three sides of the structure for holding the bulb seal in its final position. Also preferred is to have continuous flange covering the three sides including the passages between the three sides in order to have as tight fit as possible.

According to a further aspect of the invention the second flange is arranged at a distance from the sunroof greater than the distance between the first flange and the sunroof. Also preferred is to have the second flange on the same side of the structure as the first flange, i.e. on the outer periphery. However, it could be an option to have the second flange arranged on the inside of the structure/periphery and thus making it easier to detect whether or not the bulb seal has been placed in its final position.

According to the invention the structure comprises adjustment devices on the left and the right side of the structure. An advantage with this feature is to have all the parts readily available and in their correct positions.

According to the invention a second flange is available on the left and the right sides.

According to the invention the way of assembling a sunroof structure in the roof opening of a vehicle chassis comprises mounting a bulb seal on a sunroof structure comprising at least partly on the periphery of the structure, at least a part of the periphery having a first and a second flange and wherein the bulb seal is attached to the second flange, placing the sunroof structure in the roof opening, adjusting the position of the structure, and moving the bulb seal from the second flange to the first flange.

### BRIEF DESCRIPTION OF FIGURES

The device and method according to the present invention is explained below in more detail with reference to the figures.
Figure 1 shows a prior art solution of a sunroof system.
Figure 2 is a cross section of a part of the sunroof system in figure 1.
Figure 3 is a cross section of a part of the sunroof system according to the present invention with a bulb seal in the parking position
Figure 4 is a cross section of a part of the sunroof system according to the present invention with a bulb seal in its final position.
Figure 5 is a perspective view of a sunroof system according to the present invention with the two positions of the bulb seal marked on one of the sides.

### DISCLOSURE OF PREFERRED EMBODIMENTS

The device and method according to the invention will be explained with reference made to the enclosed figures. The examples are chosen in order to facilitate the reading and understanding of the device and method according to the present invention. Figures 1 and 2 showing prior art are described above in the background section.

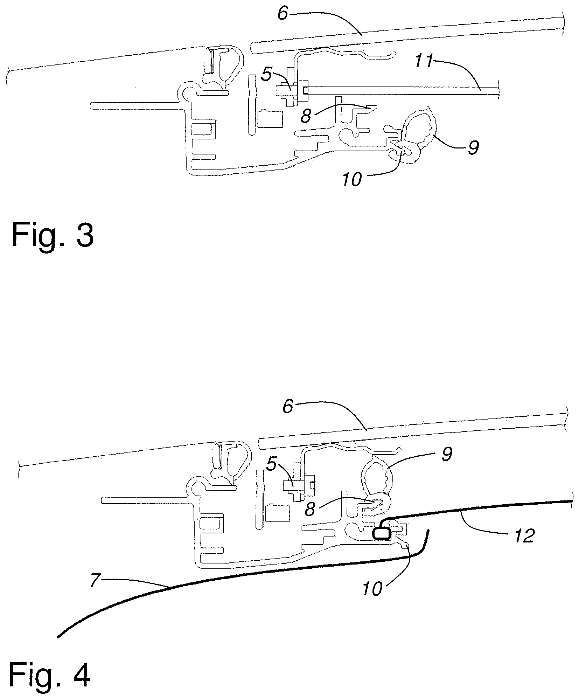

Figure 3 is a cross section of an embodiment of a sunroof structure according to the present invention for a vehicle. The structure comprises a front, a rear, a left and a right side. The structure further comprises a flange 8 for holding a bulb seal 9. The flange 8 is arranged at least partly on the front, the left and the right side of the structure. The structure also comprises a second flange 10 arranged at least partly on the left and the right side for holding the bulb seal 9 when the sunroof is being mounted. The cross section in figure 3 is from one of the sides of the structure showing an adjustment screw 5 being turned by a screwdriver 11 for adjusting the position of glass panel 6. Also, in figure 3, the bulb seal 9 is in the parking position on the second flange 10 thus enabling for the screwdriver 11 to reach the adjustment screw 5.

In figure 4 the bulb seal 9 is placed in its final position, i.e. on flange 8. Also, the headlining 7 has been added and the structure is shown with a roller blind 12 in closed position. Thus, as also can be seen in figure 4, the second flange 10 will not be visible after the headlining 7 has been mounted.

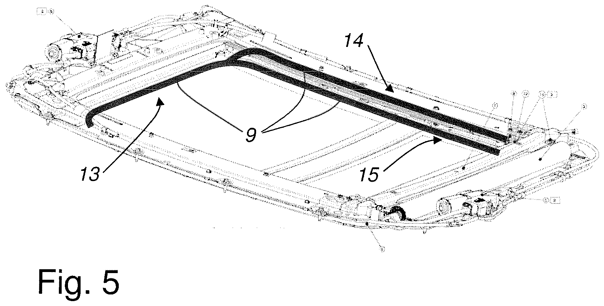

In figure 5 the sunroof structure is shown in an upside down position with the bulb seal 9 schematically shown on the front side 13 and on the left side, both in parked position 14 as well as in the final position 15. Upon mounting the sunroof structure the bulb seal is first attached to the front side 13 in its temporary position and on the second flange 10 on the sides allowing for adjustments of the panel 6 position. The whole sunroof structure can then be mounted on the chassis. This means that the bulb seal is already in position and all parts necessary are already conveniently available for the assembler. After the position of the panel 6 or panels 6 have been properly adjusted, the bulb seal 9 is simply moved from the second flange 10 to the first flange 8, i.e. where a second flange 10 is available, on the left and the right side of the sunroof structure in the embodiment described.

The foregoing is a disclosure of an example practicing the present invention. However, it is apparent that method incorporating modifications and variations will be obvious to one skilled in the art. Inasmuch as the foregoing disclosure is intended to enable one skilled in the art to practice the instant invention, it should not be construed to be limited thereby, but should be construed to include such modifications and variations as fall within the scope of the claims. For instance, the second flange could be arranged as desired on all four sides or three of the sides. A further possibility is to have some kind of indicator that clearly shows if the bulb seal is in its final position or if it is in the parking position, i.e. for facilitating for the assembler to know whether or not that part of assembling is complete.

## Claims

1. A sunroof structure for a vehicle comprising a front, a rear, a left and a right side, the structure further comprising a first flange (8) arranged for holding a bulb seal (9) in a final position, the first flange (8) being arranged at least partly on the front, the left and the right side,
**characterised in**
**that** the structure comprises a second flange (10) arranged for holding the bulb seal (9) in a temporary parking position when a sunroof (6) is being mounted and for allowing the bulb seal (9) to be moved to the final position on the first flange (8) after mounting of the sunroof (6), wherein the second flange (10) is arranged at least partly on two of the sides of the structure, the structure further comprises adjustment devices (5) arranged adjacent the second flange (10) on the left and the right side of the structure for adjusting the position of said sunroof (6), wherein the adjustment devices (5) are positioned so as to be accessible via a space occupied by the bulb seal (9) when arranged in the final position on the first flange (8), and wherein the adjustment devices (5) and the first flange (8) are accessible when the bulb seal (9) is arranged in its temporary parking position on the second flange (10).

2. A sunroof structure according to claim 1, wherein the flanges (8, 10) are extruded aluminium tracks.

3. A sunroof structure according to any of the preceding claims, wherein the second flange (10) is arranged at a distance from the sunroof (6) greater than the distance between the first flange (8) and the sunroof (6).

4. A sunroof structure according to any of the preceding claims, wherein the second flange (10) is arranged on the left and the right sides of the structure.

5. A method for assembling a sunroof structure in the roof opening of a vehicle chassis, comprising:
mounting a bulb seal (9) on a sunroof structure at least partly on the periphery of the structure, at least a part of the periphery of the structure having a first (8) and a second (10) flange and wherein the bulb seal (9) is attached to the second flange (10);
placing the sunroof structure in the roof opening; adjusting the position of the structure; and
moving the bulb seal (9) from the second flange (10) to the first flange (8),
and mounting the bulb seal (9) on the first flange (8), the parts of the periphery having two flanges.

## Patentansprüche

1. Schiebedachstruktur für ein Fahrzeug, die eine vordere, eine hintere, eine linke und eine rechte Seite umfasst, wobei die Struktur ferner einen ersten Flansch (8) umfasst, der zum Halten einer Wulstdichtung (9) in einer Endposition angeordnet ist, wobei der erste Flansch (8) mindestens teilweise auf der vorderen, der linken und der rechten Seite angeordnet ist,
**dadurch gekennzeichnet,**
**dass** die Struktur einen zweiten Flansch (10) umfasst, der zum Halten der Wulstdichtung (9) in einer zeitweiligen Parkposition, wenn ein Schiebedach (6) eingebaut wird, und zum Zulassen, dass die Wulstdichtung (9) nach dem Einbauen des Schiebedachs (6) in die Endposition an dem ersten Flansch (8) bewegt wird, angeordnet ist, wobei der zweite Flansch (10) mindestens teilweise auf zwei der Seiten der Struktur angeordnet ist, die Struktur ferner Einstellvorrichtungen (5), die benachbart zu dem zweiten Flansch (10) auf der linken und der rechten Seite der Struktur angeordnet sind, zum Einstellen der Position des Schiebedachs (6) umfasst, wobei die Einstellvorrichtungen (5) so positioniert sind, dass sie über einen Raum, der durch die Wulstdichtung (9) eingenommen wird, wenn diese in der Endposition an dem ersten Flansch (8) angeordnet ist, zugänglich sind, und wobei die Einstellvorrichtungen (5) und der erste Flansch (8) zugänglich sind, wenn die Wulstdichtung (9) in ihrer zeitweiligen Parkposition an dem zweiten Flansch (10) angeordnet ist.

2. Schiebedachstruktur nach Anspruch 1, wobei die Flansche (8, 10) extrudierte Aluminiumschienen sind.

3. Schiebedachstruktur nach einem der vorhergehenden Ansprüche, wobei der zweite Flansch (10) in einem Abstand von dem Schiebedach (6) angeordnet ist, der größer ist als der Abstand zwischen dem ersten Flansch (8) und dem Schiebedach (6).

4. Schiebedachstruktur nach einem der vorhergehenden Ansprüche, wobei der zweite Flansch (10) auf der linken und der rechten Seite der Struktur angeordnet ist.

5. Verfahren zum Einbauen einer Schiebedachstruktur in die Dachöffnung des Fahrgestells eines Fahrzeugs, umfassend:
Befestigen einer Wulstdichtung (9) an einer Schiebedachstruktur mindestens teilweise an der Peripherie der Struktur, wobei mindestens ein Teil der Peripherie der Struktur einen ersten (8) und einen zweiten (10) Flansch aufweist und wobei die Wulstdichtung (9) an dem zweiten Flansch (10) angebracht wird;
Anordnen der Schiebedachstruktur in der Dachöffnung;
Einstellen der Position der Struktur; und
Bewegen der Wulstdichtung (9) von dem zweiten Flansch (10) zu dem ersten Flansch (8) und Befestigen der Wulstdichtung (9) an dem ersten Flansch (8), wobei die Teile der Peripherie zwei Flansche aufweisen.

## Revendications

1. Structure de toit ouvrant pour un véhicule, comprenant des côtés avant, arrière, gauche et droit, la structure comprenant en outre une première bride (8) agencée pour maintenir un joint en élastomère (9) dans une position finale, la première bride (8) étant agencée au moins partiellement sur les côtés avant, gauche et droit,
**caractérisée en ce que** la structure comprend une seconde bride (10) agencée pour soutenir le joint en élastomère (9) dans une position de stationnement temporaire lorsqu'un toit ouvrant (6) est monté et pour permettre au joint en élastomère (9) d'être déplacé vers la position finale sur la première bride (8) après le montage du toit ouvrant (6), dans laquelle la seconde bride (10) est agencée au moins partiellement sur deux des côtés de la structure, la structure comprenant en outre des dispositifs de réglage (5) agencés à proximité de la seconde bride (10) sur les côtés gauche et droit de la structure et servant à régler la position dudit toit ouvrant (6), dans laquelle les dispositifs de réglage (5) sont positionnés de manière à être accessibles par l'intermédiaire d'un espace occupé par le joint en élastomère (9) lorsqu'il est agencé dans la position finale sur la première bride (8), et dans laquelle les dispositifs de réglage (5) et la première bride (8) sont accessibles lorsque le joint en élastomère (9) est agencé dans sa position de stationnement temporaire sur la seconde bride (10).

2. Structure de toit ouvrant selon la revendication 1, dans laquelle les brides (8, 10) sont des rails en aluminium extrudé.

3. Structure de toit ouvrant selon l'une quelconque des revendications précédentes, dans laquelle la seconde bride (10) est agencée à une distance du toit ouvrant (6) qui est plus grande que la distance entre la première bride (8) et le toit ouvrant (6).

4. Structure de toit ouvrant selon l'une quelconque des revendications précédentes, dans laquelle la seconde bride (10) est agencée sur les côtés gauche et droit de la structure.

5. Procédé d'assemblage d'une structure de toit ouvrant dans l'ouverture de toit d'un châssis de véhicule, comprenant les étapes suivantes:
monter un joint en élastomère (9) sur une structure de toit ouvrant au moins partiellement sur la périphérie de la structure, au moins une partie de la périphérie de la structure présentant une première (8) et une seconde (10) brides, et dans lequel le joint en élastomère (9) est attaché à la seconde bride (10);
placer la structure de toit ouvrant dans l'ouverture de toit;
régler la position de la structure; et
déplacer le joint en élastomère (9) depuis la seconde bride (10) jusqu'à la première bride (8), et monter le joint en élastomère (9) sur la première bride (8), les parties de la périphérie comprenant deux brides.
